(19) Europäisches Patentamt

European Patent Office

Office européen des brevets

(11) **EP 3 092 400 B1**

(12) **FASCICULE DE BREVET EUROPEEN**

(45) Date de publication et mention de la délivrance du brevet:
**18.10.2017 Bulletin 2017/42**

(51) Int Cl.:
***F02M 25/08*** *(2006.01)*　　***F02D 29/02*** *(2006.01)*
***F02D 41/00*** *(2006.01)*　　***F02N 11/08*** *(2006.01)*

(21) Numéro de dépôt: **14812586.7**

(22) Date de dépôt: **19.11.2014**

(86) Numéro de dépôt international:
**PCT/FR2014/052957**

(87) Numéro de publication internationale:
**WO 2015/104468 (16.07.2015 Gazette 2015/28)**

(54) **PROCÉDÉ ET DISPOSITIF D'ÉLIMINATION DE VAPEURS D'HYDROCARBURES POUR VÉHICULE**

VERFAHREN UND VORRICHTUNG ZUR BESEITIGUNG VON KOHLENWASSERSTOFFDÄMPFEN FÜR EIN FAHRZEUG

METHOD AND DEVICE FOR ELIMINATING HYDROCARBON VAPOURS FOR A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2014 FR 1450076**

(43) Date de publication de la demande:
**16.11.2016 Bulletin 2016/46**

(73) Titulaire: **Renault s.a.s**
**92100 Boulogne-Billancourt (FR)**

(72) Inventeurs:
• **LAHAYE, Belen**
**F-78580 Maule (FR)**
• **PIGNON, Pascal**
**F-91580 Etrechy (FR)**
• **JAIN, Gilbert**
**F-28130 Soulaires (FR)**
• **LAPIERRE, Caroline**
**F-91760 Itteville (FR)**
• **PRUNIER, Thierry**
**F-94240 L'Hay les Roses (FR)**

(56) Documents cités:
FR-A1- 2 990 163　　FR-A1- 2 990 175
US-A- 5 962 927　　US-A1- 2009 070 001
US-B2- 8 443 787

EP 3 092 400 B1

**Description**

L'invention concerne un procédé et un dispositif d'élimination de vapeurs d'hydrocarbures pour groupe motopropulseur de véhicule, notamment pour groupe motopropulseur hybride de véhicule automobile.

Les émissions par évaporation de carburant des véhicules sont nocives pour la santé et produisent des odeurs d'essence gênantes pour les utilisateurs. Pour remédier à ces nuisances, de nombreux véhicules sont maintenant équipés d'absorbeurs de vapeurs d'essence communément nommés aujourd'hui « canister » dans le domaine technique considéré. Par souci d'utilisation d'une terminologie française, nous emploierons le terme « flacon » en lieu et place de « canister ».

Dans le cas des motorisations hybrides, lors d'une utilisation purement électrique du véhicule, si l'absorbeur de vapeurs d'essence ou flacon arrive à la percée ou à saturation, il convient de démarrer le moteur thermique pour le purger, or l'estimation de l'état de charge du flacon est difficile. On entend par percée, un état du flacon dans lequel, les vapeurs d'essence le traversant ne pouvant plus être absorbées s'échappent à l'atmosphère par son ouverture de mise à l'air.

Dans le cas des motorisations non hybrides on détecte que le flacon est chargé moteur tournant, de par la déviation de richesse observée par la sonde oxygène lorsqu'on ouvre la vanne de purge. Sur les moteurs hybrides on souhaite éviter de démarrer le moteur thermique tant que faire se peut car l'intérêt de l'hybridation est d'émettre le moins possible de gaz polluants et de consommer le moins possible de carburant

Le document US8443787 divulgue un procédé de purge de flacon absorbeur de vapeurs d'essence pour activer une purge lorsque le moteur thermique tourne en fonction de conditions sur le réservoir de carburant. Les procédés antérieurement divulgués sont adaptés à une motorisation hybride dans laquelle le moteur thermique tourne régulièrement mais ils posent de nombreux problèmes, notamment dans le cas d'une motorisation hybride rechargeable qui peut aller parfois jusqu'à ne pratiquement jamais démarrer le moteur thermique ou que très rarement.

Le document US 5 962 927 A divulgue un autre procédé de purge de flacon absorbeur de vapeurs essence.

Pour remédier aux problèmes de l'état antérieur de la technique, le procédé et le dispositif présentés ont pour but de donner une estimation de la charge flacon suffisamment fiable pour limiter le nombre de redémarrages au juste nécessaire. On peut ainsi limiter l'usure du moteur thermique, les émissions de CO2 et la consommation de carburant.

L'intérêt est d'autant plus important sur une motorisation hybride rechargeable (Plug-in Hybride en anglais) car la forte autonomie en mode tout électrique installée est à l'origine d'usages purement électriques prolongés du véhicule.

Pour répondre au but poursuivi, l'invention a pour objet un procédé d'élimination de vapeurs d'hydrocarbures générées à partir d'un réservoir de carburant pour groupe motopropulseur de véhicule comprenant au moins un moteur thermique, au moyen d'un flacon absorbeur des dites vapeurs, caractérisé en ce qu'il comporte des étapes consistant à :

- détecter des passages de vapeurs d'hydrocarbure dudit réservoir audit flacon ;
- augmenter une valeur (Compt.) de compteur lorsque lesdites vapeurs passent dudit réservoir audit flacon ;
- calculer un nombre (nBV) de volumes de gaz traversant ledit flacon lorsque le moteur thermique est démarré de manière à diminuer la valeur du compteur en purgeant lesdites vapeurs d'essence vers le moteur.

Particulièrement, les passages de vapeurs d'hydrocarbure dudit réservoir audit flacon sont détectés au moyen d'un signal d'ouverture de clapet taré qui permet aux vapeurs d'hydrocarbure de passer dudit réservoir audit flacon.

Plus particulièrement, le signal d'ouverture de clapet taré est généré par une valeur de pression en aval du clapet supérieure à une valeur de seuil.

De préférence la valeur du compteur est diminuée en suivant une courbe de décharge en fonction du nombre de volumes de gaz traversant ledit flacon.

Avantageusement lorsque le groupe motopropulseur est hybride, le procédé comprend des étapes consistant à :

- détecter un mode de motorisation non thermique ;
- détecter que la valeur de compteur est supérieure à une valeur maximale ;
- générer une requête de démarrage du moteur thermique lorsque ladite valeur de compteur est supérieure à une valeur maximale.

L'invention a aussi pour objet un programme d'ordinateur comprenant des instructions de code de programme pour l'exécution des étapes du procédé selon l'invention lorsque ledit programme est exécuté sur un ou plusieurs ordinateurs.

L'invention a aussi pour objet un dispositif d'élimination de vapeurs d'hydrocarbures générées à partir d'un réservoir de carburant pour groupe motopropulseur de véhicule comprenant au moins un moteur thermique, au moyen d'un flacon absorbeur des dites vapeurs, caractérisé en ce qu'il comporte :

- des moyens de détection de passages de vapeurs d'hydrocarbure dudit réservoir audit flacon ;
- un calculateur connecté auxdits moyens de détection pour augmenter une valeur de compteur lorsque lesdites vapeurs passent dudit réservoir audit flacon ;

- une vanne pilotée par le calculateur pour faire traverser ledit flacon par un nombre de volumes de gaz lorsque le moteur thermique est démarré de manière à diminuer la valeur du compteur en purgeant lesdites vapeurs d'essence vers le moteur.

Particulièrement, les moyens de détection de passage de vapeurs d'hydrocarbure dudit réservoir audit flacon comportent un clapet taré dont une ouverture qui permet aux vapeurs d'hydrocarbure de passer dudit réservoir audit flacon est signalée au calculateur.

Plus particulièrement, les moyens de détection de passage de vapeurs d'hydrocarbure comportent un capteur de pression en aval du clapet pour signaler une valeur de pression au calculateur représentative de l'ouverture du clapet.

De préférence, le calculateur comporte une mémoire contenant une courbe de décharge qui permet de diminuer la valeur du compteur en la suivant en fonction d'un nombre de volumes de gaz traversant ledit flacon.

D'autres caractéristiques et avantages de l'invention apparaîtront au cours de la lecture de la description détaillée qui va suivre pour la compréhension de laquelle on se reportera aux dessins annexés parmi lesquels :

- la figure 1 est un schéma qui représente un système de motorisation hybride pour véhicule avec son circuit d'alimentation en carburant ;
- les figures 2 et 3 sont des schémas de dispositifs d'élimination de vapeurs d'hydrocarbures conformes à l'invention ;
- la figure 4 est un organigramme qui montre des étapes de procédé conforme à l'invention ;
- la figure 5 est un graphe d'évolution massique en charge et en décharge du flacon au cours du temps.

Dans la suite de la description, des éléments présentant une structure identique ou des fonctions analogues seront désignés par un même numéro de référence.

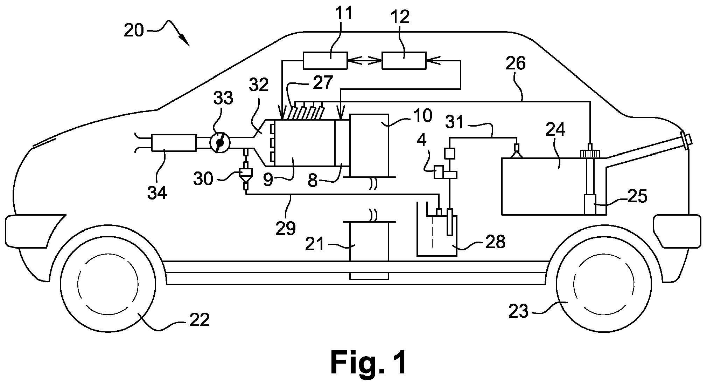

La figure 1 montre de manière schématique un véhicule 20 équipé d'une motorisation hybride qui, par souci de simplification, présente une seule machine électrique 8 en prise avec une transmission 21 connue par ailleurs, via un réducteur 10. La motorisation hybride comporte aussi un moteur thermique 9. Le moteur thermique 9 est en prise avec la machine électrique 8 et la transmission 10, ou tourne à vide. Le moteur thermique 9 est piloté par un calculateur moteur 11. Un calculateur hybride 12 gère la répartition de couple et de puissance entre la machine électrique 8 et le moteur thermique 9.

La motorisation hybride présentée ci-dessus l'est à titre purement illustratif. L'invention est tout aussi applicable à d'autres types de motorisation hybrides comme par exemple à ceux à plusieurs machines électriques et/ou à machine(s) électriques(s) couplées à un train de roues 23 différent du train de roues 22 auquel le moteur thermique est couplé.

Un réservoir de carburant 24, notamment d'essence, permet d'alimenter le moteur thermique 9 de manière connue en soi via une pompe 25, une conduite 26 et des injecteurs 27.

Un flacon 28 ou absorbeur de vapeurs d'essence a pour fonction d'emmagasiner les vapeurs essence qui se forment dans le réservoir 24 du véhicule 20 au-dessus de la nappe d'essence pour éviter de rejeter ces vapeurs d'essence dans l'atmosphère. La mise à l'air du réservoir 24 est alors déportée sur le flacon 28 via une conduite 31. Les vapeurs d'essence contenues dans le flacon 28 sont régulièrement purgées vers le moteur thermique 9 via une conduite 29 de façon à les brûler lorsque le moteur thermique est mis en fonctionnement. La conduite 29 débouche en amont d'un collecteur 32 d'entrée d'air comburant du moteur thermique 9 en aval d'un volet 33 de modulation de débit d'air comburant, de sorte qu'un effet énergétique des vapeurs d'essence mélangées à l'air comburant, s'ajoute à celui du carburant qui alimente le moteur thermique 9 via les injecteurs 27. Un dosage des vapeurs en provenance du flacon 28, est fait par une vanne de purge 30 électro commandée par le calculateur moteur 11. L'air comburant est purifié par ailleurs de manière connue en soit par un filtre 34 disposé en amont du volet 33.

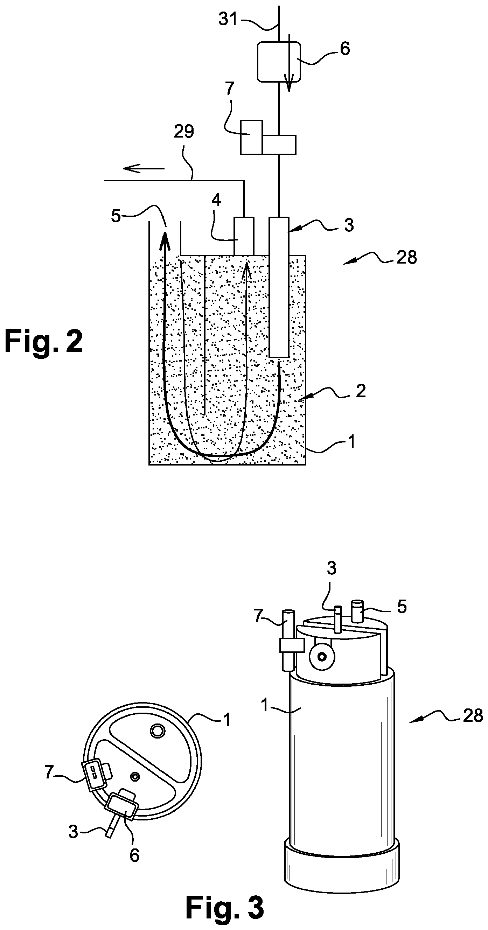

Comme représenté plus en détails sur la figure 2, le flacon 28 comporte un corps 1 constitué d'une enveloppe en plastique injecté. Le corps 1, contient un agent d'absorption 2, notamment du charbon actif. Les connexions du flacon avec le reste du système de purge se font via une canule 3 de piquage réservoir branchée sur la conduite 31 et une canule 4 de piquage de purge moteur branchée sur la conduite 29.

Le flacon 28 de la figure 2 présente une architecture en U. Pendant les phases de purge (flèche allant de la gauche vers la droite), les vapeurs progressent depuis une ouverture 5 de mise à l'air vers la canule 4 de piquage de purge. Pendant les phases de charge (flèche allant de la droite vers la gauche), la vapeur progresse depuis la canule 3 de piquage réservoir vers l'ouverture 5 de mise à l'air.

Dans le cas des motorisations exclusivement thermiques, le moteur thermique tournant en permanence tant que le véhicule est en marche, il est souvent possible de purger le flacon en ouvrant la vanne de purge 30 électro commandée par le calculateur moteur 11 qui en tient compte pour piloter la régulation en richesse de combustion du moteur.

Dans le cas des motorisations hybrides il y a moins d'opportunités de purge du fait d'un fonctionnement plus rare ou amoindri du moteur thermique. Il est alors avantageux de retarder la charge du flacon avec un clapet 6 taré à faible pression, de valeur de tarage nommée par exemple « pt ». Le dispositif de l'invention est remarquable en ce qu'il est équipé de moyens de détection d'ouverture et de fermeture du clapet 6 connectés au calculateur moteur 11, pour détecter les durées d'ouverture du clapet et ainsi mesurer un cumul des temps de charge qui est stocké dans un compteur en mémoire (non représenté) du calculateur 11. Différents moyens de détection d'ouverture et de fermeture du clapet 6 sont possibles comme par exemple ceux d'équiper le clapet avec un contact électrique intégré qui s'ouvre et se ferme en relation avec la fermeture et l'ouverture ou réciproquement du clapet 6.

Les moyens de détection mis en oeuvre dans le mode de réalisation illustré par la figure 2 sont constitués d'un capteur 7 de pression situé en aval du clapet 6. Il peut parfois être plus simple d'approvisionner d'une part un clapet taré élémentaire et d'autre part un capteur de pression élémentaire que de concevoir un clapet doté d'un contact électrique et taré aux valeurs souhaitées à faible coût. D'autre part, une valeur de pression fournie par le capteur 7 est plus représentative d'une mise en communication effective du réservoir d'essence avec le flacon. De tels moyens de détection, lorsqu'ils sont désolidarisés du clapet, permettent aussi de dissocier la localisation du capteur 7 de pression à proximité du flacon et du clapet 6 taré à proximité du flacon ou à proximité du réservoir.

D'autres moyens de détection pourraient être mis en oeuvre comme par exemple ceux comportant un débitmètre pour mesurer un flux de vapeur d'essence suit à l'ouverture du clapet. Il faut cependant prendre garde à utiliser des moyens simples et robustes pour ne pas augmenter inutilement le coût du dispositif.

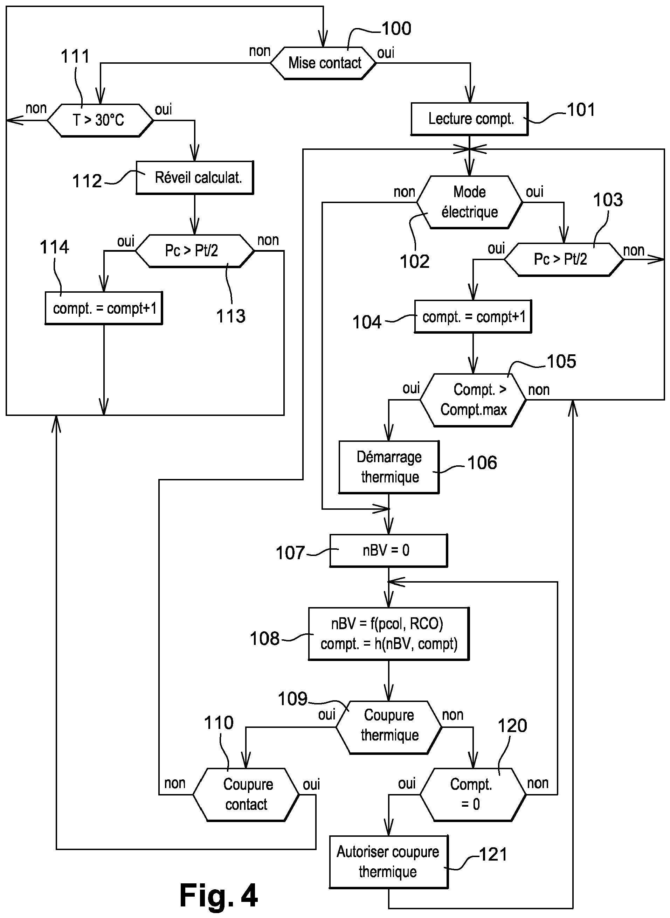

Lorsque le cumul des temps de charge, nommé « Compt. » réactualisé en permanence par le mécanisme expliqué ci-après en référence à la figure 4, atteint une valeur limite correspondant à un temps limite de charge et nommé « Compt.max », on considère que le flacon est proche de la percée. Le calculateur moteur 11 sollicite alors le moteur thermique 9 pour le démarrer et purger à la première opportunité, à l'instant si on est en roulage ou au prochain roulage si on est à l'arrêt. En cas d'existence de zones à fonctionnement électrique obligatoire, par exemple dans certaines villes du futur, on peut aussi prévoir de démarrer le moteur thermique au prochain roulage en zone à fonctionnement thermique autorisé.

Après une purge de flacon le compteur de temps est réinitialisé à zéro si la purge est complète (environ 20km ou 500BV de volume de purge) ou à une valeur de temps correspondant à la charge du flacon au moment de l'arrêt de la purge. Il existe plusieurs façons d'estimer l'état de purge du flacon une fois que le moteur est démarré, le procédé expliqué ci-dessous prend en illustre les éléments communs qui sont propres à l'invention. L'unité indiquée par l'acronyme BV (Bed Volume en anglais pour volume du lit de charbon actif contenu dans le flacon) correspond à un volume de gaz traversant le flacon égal au volume intérieur du flacon, en d'autres termes équivalent flacon. Ainsi, 500 BV correspondent à un volume de gaz traversant le flacon égal à 500 fois son volume.

Un programme d'ordinateur installé sur l'un des deux calculateurs 11, 12 ou en partage sur les deux calculateurs 11 et 12, comprend des instructions de code de programme pour l'exécution des étapes du procédé expliqué maintenant en référence à la figure 4 lorsque le programme est exécuté sur un ou plusieurs ordinateurs.

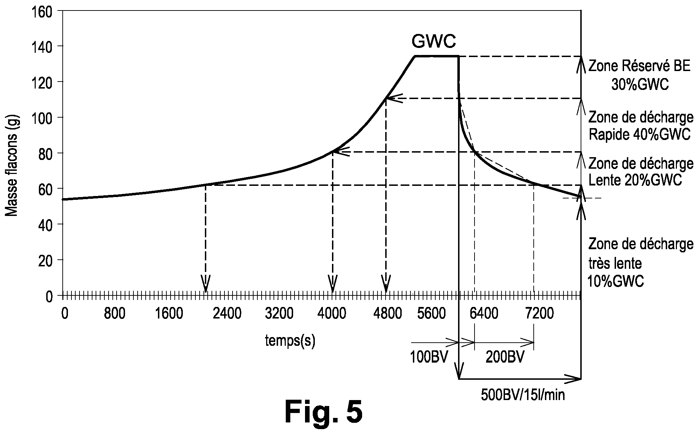

Les étapes du procédé consistent essentiellement à mesurer et contrôler l'état de charge du flacon en continu à partir d'une courbe de charge-décharge du flacon et d'un nombre de volumes élémentaires de gaz passé par le flacon exprimé en Bed Volumes et nommé nBV, comme expliqué plus loin en référence à la figure 5. Le nombre de volumes élémentaires traversant le flacon est facile à calculer à partir de la pression dans collecteur 32 d'entrée d'air comburant « pcol », et d'un taux « RCO » d'ouverture de la vanne 30. Le calculateur 11 exploite déjà de manière connue par ailleurs la pression dans collecteur 32 d'entrée d'air comburant « pcol » pour contrôler par exemple la combustion dans le moteur, sans qu'il soit nécessaire de s'étendre longuement sur les différentes manières pour le calculateur 11 d'obtenir la valeur de la pression dans collecteur 32 d'entrée d'air comburant « pcol », largement accessible dans la littérature. Le calculateur qui pilote la vanne 30 électro commandée, en connaît de fait le taux « RCO » d'ouverture, qui s'il n'est pas le calculateur 11, peut le mettre à disposition du calculateur 11 par le bus CAN.

A partir d'une étape 100 de détection de mise en contact du véhicule, une étape 101 de lecture du compteur est activée si la mise en contact est présente et une étape 111 de détection de seuil de température est activée si la mise en contact n'est pas présente.

L'étape 111 de détection de seuil de température a pour but de surveiller si la température ambiante T dépasse un seuil de température, par exemple de 30°C au-delà duquel on estime que l'essence accroit son taux d'évaporation.

L'étape 111 reboucle sur l'étape 100 tant que la température ambiante ne dépasse pas le seuil de température.

Si la température ambiante T dépasse le seuil de température, une étape 112 de réveil calculateur est activée pour réveiller le calculateur 11 qui exécute alors une étape 113 de surveillance d'ouverture du clapet 6 de tarage. Dans le cas où la détection d'ouverture du clapet 6 de tarage est réalisée au moyen du capteur 7 de pression, la détection par le capteur 7 de pression Pc de l'ouverture du clapet est de préférence calibrée à la moitié de la pression de tarage Pt. Il est possible de choisir une calibration sensiblement différente de Pt/2 dans une plage de pressions suffisamment inférieures à la pression de tarage pour tenir compte des pertes de charge générées par la circulation des vapeurs lors de l'ouverture du clapet et suffisamment supérieures à zéro pour ne pas déclencher de détection intempestive.

L'étape 113 reboucle sur l'étape 100 tant que l'ouverture du clapet 6 n'est pas détectée.

Lorsque l'ouverture du clapet 6 est détectée, une étape 114 d'incrémentation du compteur est activée pour prendre en compte la charge en vapeur d'essence qui résulte de l'ouverture du clapet 6 par mise en communication du réservoir 24 avec le flacon 28. Après mise à jour du compteur, l'étape 113 reboucle sur l'étape 100.

Chaque rebouclage sur l'étape 100 dans laquelle il est détecté que la mise en contact du véhicule n'est pas présente, provoque une remise en sommeil du calculateur 11 dans un but d'économie d'énergie. Les étapes 100, 111 et 112 sont quant à elles exécutées par un calculateur en veille permanente. Ce calculateur en veille permanente est par exemple de manière connue le calculateur qui surveille la condamnation des portes, la mise en contact du véhicule et divers autres événements utiles à surveiller en absence de mise de contact par un utilisateur.

L'étape 101 de lecture du compteur activée après mise en contact du véhicule, permet d'estimer le taux de charge du flacon.

L'étape 101 est suivie par une étape 102 de détection du mode de fonctionnement du groupe motopropulseur hybride. L'étape 102, comme toute étape du procédé sur laquelle une autre étape reboucle, est activée à nouveau après une période d'échantillonnage, par exemple d'une seconde.

Une étape 103 semblable à l'étape 113 est activée si le mode de fonctionnement du groupe motopropulseur hybride est un mode autre que le mode thermique comme par exemple un mode électrique, ou encore un mode pneumatique, en d'autre termes tout mode de motorisation dans lequel le moteur thermique est arrêté.

L'étape 103 reboucle sur l'étape 102 tant que l'ouverture du clapet 6 n'est pas détectée.

Lorsque l'ouverture du clapet 6 est détectée, une étape 104 semblable à l'étape 114 est activée pour prendre en compte la charge en vapeur d'essence qui résulte de l'ouverture du clapet 6 par mise en communication du réservoir 24 avec le flacon 28. Après mise à jour du compteur, l'étape 103 active à sa suite une étape 105 de vérification du contenu du compteur.

Tant que le contenu « Compt. » du compteur n'est pas supérieur à une valeur maximale « Compt.max » représentative d'une saturation du lit de charbon actif dans le flacon 28, l'étape 105 reboucle sur l'étape 102.

Un dépassement de la valeur maximale « Compt.max » par le contenu « Compt. » du compteur, active une étape 106 qui consiste à générer une requête de démarrage du moteur thermique.

Ensuite une étape 107 consiste à initialiser un nombre nBV de volumes de flacon à zéro.

Lorsque le moteur thermique est démarré, le calculateur 11 pilote une ouverture de la vanne 30 électro commandée dans une étape 108 au cours de laquelle une augmentation ΔnBV de nombre de volumes de flacon au cours d'une période d'échantillonnage est calculée en fonction de la pression collecteur d'admission pcol et du taux RCO d'ouverture de la vanne 30.

$$\Delta nBV := f(pcol, RCO)$$

Ce calcul applique les lois connues de la mécanique des fluides qui donnent un débit en fonction de la différence de pression entre le flacon 28 et l'entrée en collecteur d'admission 32 d'une part et les pertes de charges sur l'acheminement des vapeurs à partir du flacon 28 jusqu'à l'entrée du collecteur d'admission 32. Les pertes de charges étant reproductibles pour chaque du taux RCO d'ouverture de la vanne 30, il suffit de les mesurer en phase de test du groupe motopropulseur et de les reporter dans une table associative en mémoire du calculateur 11 pour lui permettre de les retrouver ensuite en cours de vie véhicule.

En étape 108, le nombre nBV de volumes de flacon est alors actualisé en ajoutant son augmentation ΔnBV à sa valeur obtenue précédemment par la formule :

$$nBV := nBV + \Delta nBV$$

Sur le graphe de la figure 5, les valeurs du compteur portées à titre illustratif de 0 à 5600 sur l'abscisse des temps correspondent à celles obtenues dans l'une des étapes 104 ou 114 pendant la charge en vapeurs d'essence du flacon 28 dont la masse portée en ordonnée varie en conséquence de sensiblement 55 g à sensiblement 140 g. La courbe croissante sur cette partie du graphe est limitée à une valeur GWC (acronyme de l'expression anglaise Gasoline Working Capacity) qui correspond à la capacité d'absorption d'essence du flacon (canister en anglais) 28. Lorsque la masse du flacon atteint la somme de sa valeur minimale en fonctionnement établi et de la valeur GWC, les vapeurs d'essence qui le traversent ne peuvent plus être absorbées et lorsque le temps continue à augmenter, la masse du flacon restant constante, les vapeurs ressortent par l'ouverture 5 de mise à l'air si elles ne sont pas éliminées via la canule 4 de piquage de purge.

La courbe d'évolution de la masse du flacon 28 varie d'un type de flacon à un autre en fonction notamment du volume de charbon actif ou autre matière absorbante qu'il contient. L'allure est cependant sensiblement toujours la même et seules les valeurs changent, valeurs qui, pour chaque type de flacon sont données par son fabriquant, éventuellement vérifiées et/ou mises au point pendant des phases d'essai.

Dans l'exemple illustré par la figure 5, on pourrait prendre une valeur Compt.max de l'ordre de 5200 mais on peut préférer se garder une marge de sécurité par exemple de 30% de GWC correspondant à une zone réservée BE ici comprise entre 110 g et 140 g. Le point de la courbe à 110 g en ordonnée donne alors en abscisse une valeur Compt.max de l'ordre de 4800.

La courbe décroissante sur la partie droite du graphe donne l'évolution de masse en phase de décharge du flacon. La pente en fonction du nombre de BV qui traverse le flacon, est d'autant plus forte que le flacon est fortement chargé. Ainsi par exemple 100BV suffisent à faire passer la masse de 110 g à 80 g alors qu'au moins 200 BV sont nécessaires pour faire passer la masse de 80 g à 60 g. Ici 500 BV qui correspondent dans le cas illustré à 15 litres par minute, sont nécessaires pour retrouver la masse minimale en fonctionnement établi légèrement supérieure à 50 g. La masse minimale en fonctionnement établi correspond généralement à la masse à vide du flacon à laquelle s'ajoute une masse résiduelle de vapeur d'essence prisonnière des pores microscopiques de la matière absorbante et qui ne peut pas être purgée.

Le calculateur 11 qui peut accéder en mémoire à chacune des courbes de charge et de décharge du type de flacon auquel appartient le flacon géré, peut alors remettre à jour en étape 108 la valeur du compteur « compt. = h(nBV, compt.) » de la manière suivante sur le graphe.

La valeur du compteur « compt. » en entrée de l'étape 108 permet au calculateur de se positionner sur un premier point de la courbe croissante en phase de charge qui donne la masse du flacon avant purge de nBV. Ce premier point correspond à un deuxième point de masse identique sur la courbe décroissante en phase de décharge qui après purge de nBV, mène à un troisième point en suivant la courbe décroissante correspondant à une masse diminuée des vapeurs d'essence qui ont été purgées. Ce troisième point correspond à un quatrième point sur la courbe croissante de masse diminuée identique. Le quatrième point donne alors sur l'axe des abscisses, une valeur de compteur « compt. » inférieure en sortie d'étape 108.

A la suite de l'étape 108, une étape 109 consiste à vérifier si une coupure du moteur thermique risque d'interrompre le processus de purge initié par l'étape 107.

S'il n'y a pas coupure du moteur thermique, une étape 120 consiste à vérifier si le compteur est à zéro. Si le compteur est à zéro, il n'est plus nécessaire de purger le flacon 28 et le procédé autorise alors une coupure du moteur thermique en étape 121 avant de reboucler en étape 102 pour vérifier si la motorisation est passée en mode électrique.

Si le compteur n'est pas à zéro en étape 120, il est nécessaire de continuer la purge du flacon et l'étape 120 reboucle alors sur l'étape 108 pour une itération supplémentaire de façon à poursuivre la purge du flacon.

Si une coupure du moteur thermique est détectée en étape 109, une étape 110 consiste à vérifier si la coupure du moteur thermique résulte d'une coupure de contact, par exemple parce que l'utilisateur est arrivé à destination ou pour d'autres raisons. En cas de coupure de contact détectée en étape 110, le procédé reboucle sur l'étape 100.

En absence de coupure de contact détectée en étape 110, le procédé reboucle sur l'étape 102 pour vérifier si la coupure du moteur thermique résulte d'un passage en mode électrique.

Lorsque, à la suite d'une mise du contact du véhicule détectée en étape 100 ou du mode électrique précédemment détecté en étape 102, le moteur thermique a démarré pour des raisons extérieures au procédé, par exemple suite à une détection de charge faible de batterie de traction par le calculateur hybride 12 ou pour d'autres raisons, l'absence de mode électrique détecté en étape 102 branche alors le procédé directement en étape 107 pour purger préventivement le flacon sans que le compteur soit arrivé nécessairement à sa valeur maximale.

Il est possible de remettre à jour le compteur de charge comme expliqué ci-dessus, à chaque itération de l'étape 108 ou après la dernière itération de l'étape 108, par exemple à la fin d'un trajet.

La figure 3 montre un exemple de dispositif d'élimination de vapeurs d'hydrocarbures dans lequel le clapet taré 6 et le capteur 7 sont intégrés sur le corps 1 du flacon 28. Les principaux avantages sont ceux du gain de place et de l'augmentation de fiabilité résultant de la diminution du nombre d'interfaces. La qualité de l'estimation est elle aussi améliorée car le capteur de pression est près du clapet et du flacon.

La solution proposée nécessite une veille ou réveil régulier du calculateur du moteur thermique pour faire l'acquisition d'information auprès du capteur de pression monté sur le flacon. Par exemple, pour une température ambiante significative qui provoque une ouverture du clapet taré 6 (par exemple T> 30°C), le calculateur habitacle, qui relève la température de l'air, va d'abord se réveiller et donner ordre au calculateur moteur thermique de se réveiller à son tour de manière à en faire l'acquisition.

Pour chaque type flacon il est préférable de mesurer le temps de percé enveloppe pour différentes conditions de température propres au marché de commercialisation du véhicule.

La réalisation de la figure 3 où le flacon comporte le capteur et le clapet intégré peut s'appliquer à tout véhicule de motorisation essence avec système à évaporation semi-pressurisée.

**Revendications**

1. Procédé d'élimination de vapeurs d'hydrocarbures générées à partir d'un réservoir (24) de carburant pour groupe motopropulseur de véhicule comprenant au moins un moteur thermique (9), au moyen d'un flacon (28) absorbeur des dites vapeurs, **caractérisé en ce qu'**il comporte des étapes consistant à :

- détecter (103, 113) des passages de vapeurs d'hydrocarbure dudit réservoir (24) audit flacon (28) au moyen d'un signal d'ouverture de clapet taré (6) qui permet aux vapeurs d'hydrocarbure de passer dudit réservoir audit flacon (28) ;
- augmenter (104, 114) une valeur (Compt.) de compteur lorsque lesdites vapeurs passent dudit réservoir audit flacon (28);
- calculer (108) un nombre (nBV) de volumes de gaz traversant ledit flacon lorsque le moteur thermique (9) est démarré de manière à diminuer la valeur du compteur en purgeant lesdites vapeurs d'essence vers le moteur. (9)

2. Procédé selon la revendication 1, dans lequel le signal d'ouverture de clapet taré (6) est généré par une valeur de pression (Pc) en aval du clapet supérieure à une valeur de seuil (Pt/2).

3. Procédé selon l'une des revendications précédentes dans lequel la valeur du compteur est diminuée en suivant une courbe de décharge en fonction du nombre (nBV) de volumes de gaz traversant ledit flacon (28).

4. Procédé selon l'une des revendications précédentes dans lequel le groupe motopropulseur est hybride, **caractérisé en ce qu'**il comprend des étapes consistant à :

   - détecter (102) un mode de motorisation non thermique ;
   - détecter (105) que la valeur (Compt.) de compteur est supérieure à une valeur maximale (Compt.max) ;
   - générer (106) une requête de démarrage du moteur thermique lorsque ladite valeur (Compt.) de compteur est supérieure à une valeur maximale (Compt.max).

5. Programme d'ordinateur comprenant des instructions de code de programme pour l'exécution des étapes du procédé selon l'une des revendications 1 à 4 lorsque ledit programme est exécuté sur un ou plusieurs ordinateurs.

6. Dispositif d'élimination de vapeurs d'hydrocarbures générées à partir d'un réservoir (24) de carburant pour groupe motopropulseur de véhicule comprenant au moins un moteur thermique (9), au moyen d'un flacon (28) absorbeur des dites vapeurs, **caractérisé en ce qu'**il comporte :

   - des moyens de détection (6, 7) de passages de vapeurs d'hydrocarbure dudit réservoir (24) audit flacon (28) qui comportent un clapet taré (6) dont une ouverture qui permet aux vapeurs d'hydrocarbure de passer dudit réservoir audit flacon est signalée au calculateur (11);
   - un calculateur (11) connecté auxdits moyens de détection (6, 7) pour augmenter une valeur (Compt.) de compteur lorsque lesdites vapeurs passent dudit réservoir (24) audit flacon (28) ;
   - une vanne (30) pilotée par le calculateur (11) pour faire traverser ledit flacon par un nombre (nBV) de volumes de gaz lorsque le moteur thermique (9) est démarré de manière à diminuer la valeur du compteur en purgeant lesdites vapeurs d'essence vers le moteur.

7. Dispositif selon la revendication 6, dans lequel les moyens de détection de passage de vapeurs d'hydrocarbure comportent un capteur de pression (7) en aval du clapet (6) pour signaler une valeur de pression (Pc) au calculateur (11) représentative de l'ouverture du clapet (6).

8. Dispositif selon l'une des revendications 6 ou 7 dans lequel le calculateur (11) comporte une mémoire contenant une courbe de décharge qui permet de diminuer la valeur du compteur en la suivant en fonction d'un nombre (nBV) de volumes de gaz traversant ledit flacon (28).

**Patentansprüche**

1. Verfahren zur Beseitigung von Kohlenwasserstoffdämpfen, die ausgehend von einem Kraftstoffvorratstank (24) für einen Antriebstrang eines Kraftfahrzeuges erzeugt werden, das mindestens einen Verbrennungsmotor (9) umfasst, mit Hilfe eines Absorbierungsbehälters (28) für diese Dämpfe, **dadurch gekennzeichnet, dass** es die folgenden Schritte umfasst, bestehend aus:

   - Detektieren (103, 113) der Durchgänge von Kohlenwasserstoffdämpfen aus dem Vorratstank (24) in den Behälter (28) mit Hilfe eines Öffnungssignals eines belasteten Klappenventils (6), das den Kohlenwasserstoffdämpfen ermöglicht, aus dem Vorratstank in den Behälter (28) überzugehen;
   - Erhöhen (104, 114) eines Zählerwertes (Zähler), wenn die Dämpfe aus dem Vorratstank in den Behälter (28) übergehen;
   - Berechnen (108) einer Anzahl (nBV) an Gasvolumina, die den Behälter durchqueren, wenn der Verbrennungsmotor (9) dergestalt angelassen wird, dass der Wert des Zählers abgesenkt wird, indem die Kraftstoffdämpfe zu dem Motor abgelassen werden.

2. Verfahren nach Anspruch 1, wobei das Öffnungssignal des belasteten Klappenventils (6) durch einen Druckwert (Pc) stromabwärts des Ventils erzeugt wird, der höher als ein Schwellenwert (Pt/2) ist.

3. Verfahren nach einem der vorhergehenden Ansprüche, wobei der Wert des Zählers gemäß einer Entlastungskurve in Abhängigkeit von der Anzahl (nBV) an Gasvolumina abgesenkt wird, die den Behälter (28) durchqueren.

4. Verfahren nach einem der vorhergehenden Ansprüche, wobei der Antriebsstrang hybrid ist, **dadurch gekennzeichnet, dass** es die folgenden Schritte aufweist, bestehend aus:

   - Erfassen (102) eines nicht thermischen Motorisierungsmodus;
   - Erfassen (105), dass der Zählerwert (Zähler) über einem maximalen Wert (Zähler max.) liegt;
   - Erzeugen (106) einer Anlassanforderung des Verbrennungsmotors, wenn der Zählerwert (Zähler) über einem maximalen Wert (Zähler max.) liegt.

5. Computerprogramm, das Programmcodeanweisungen zur Ausführung der Schritte des Verfahrens nach einem der Ansprüche 1 bis 4 aufweist, wenn das Programm auf einem oder mehreren Computern ausgeführt wird.

6. Vorrichtung zur Beseitigung von Kohlenwasserstoffdämpfen, die ausgehend von einem Kraftstoffvorratstank (24) für einen Antriebsstrang eines Kraftfahrzeuges erzeugt werden, das mindestens einen Verbrennungsmotor (9) umfasst, mit Hilfe eines Absorbierungsbehälters (28) für diese Dämpfe, **dadurch gekennzeichnet, dass** es Folgendes umfasst:

   - Detektionsmittel (6, 7) der Durchgänge von Kohlenwasserstoffdämpfen aus dem Vorratstank (24) in den Behälter (28), der ein belastetes Klappenventil (6) umfasst, dessen Öffnung, die den Kohlenwasserstoffdämpfen ermöglicht, aus dem Vorratstank in den Behälter überzugehen, der Berechnungseinrichtung (11) signalisiert wird;
   - eine Berechnungseinrichtung (11), die mit den Detektionsmitteln (6, 7) verbunden ist, um einen Zählerwert (Zähler) zu erhöhen, wenn die Dämpfe aus dem Vorratstank (24) in den Behälter (28) übergehen;
   - ein Ventil (30), das durch die Berechnungseinrichtung (11) gesteuert wird, um eine Anzahl (nBV) an Gasvolumina zu veranlassen, den Behälter zu durchqueren, wenn der Verbrennungsmotor (9) dergestalt angelassen wird, dass der Wert des Zählers abgesenkt wird, indem die Kraftstoffdämpfe zu dem Motor abgelassen werden.

7. Vorrichtung nach Anspruch 6, wobei die Detektionsmittel des Durchganges der Kohlenwasserstoffdämpfe einen Drucksensor (7) stromabwärts des Klappenventils (6) umfassen, um der Berechnungseinrichtung (11) einen Druckwert (Pc) zu signalisieren, der für die Öffnung des Klappenventils (6) repräsentativ ist.

8. Vorrichtung nach einem der Ansprüche 6 oder 7, wobei die Berechnungseinrichtung (11) einen Speicher umfasst, der eine Entlastungskurve enthält, die es ermöglicht, den Wert des Zählers abzusenken, indem sie in Abhängigkeit von einer Anzahl (nBV) an Gasvolumina, die den Behälter (28) durchqueren, eingehalten wird.

**Claims**

1. Method for eliminating hydrocarbon vapors generated in a fuel tank (24) of a vehicle powertrain including at least one heat engine (9), by means of a canister (28) adapted to absorb said vapors, **characterized in that** it includes steps consisting in:

   - detecting (103, 113) movements of hydrocarbon vapors from said tank (24) to said canister (28) by means of a calibrated valve (6) opening signal that allows the hydrocarbon vapors to move from said tank to said canister (28);
   - increasing (104, 114) a counter value (Counter) when said vapors move from said tank to said canister (28);
   - calculating (108) a number (nBV) of gas volumes passing through said canister when the heat engine (9) is started so as to reduce the value of the counter by purging said gasoline vapors in the direction of the engine (9).

2. Method according to Claim 1, wherein the calibrated valve (6) opening signal is generated by a pressure value (Pc) on the downstream side of the valve exceeding a threshold value (Pt/2).

3. Method according to either of the preceding claims wherein the value of the counter is decreased by tracking a discharge curve as a function of the number (nBV) of gas volumes passing through said canister (28).

4. Method according to one of the preceding claims wherein the powertrain is hybrid, **characterized in that** it includes steps consisting in:

   - detecting (102) a non-thermal drive mode;
   - detecting (105) that the counter value (Counter) exceeds a maximum value (Counter.max);
   - generating (106) a request to start the heat engine when said counter value (Counter) exceeds a maximum value (Counter.max).

**EP 3 092 400 B1**

5. Computer program including program code instructions for the execution of the steps of the method according to one of Claims 1 to 4 when said program is executed on one or more computers.

6. Device for eliminating hydrocarbon vapors generated in a fuel tank of a vehicle powertrain including at least one heat engine (9), by means of a canister (28) adapted to absorb said vapors, **characterized in that** it includes:

   - means (6, 7) for detecting movements of hydrocarbon vapors from said tank (24) to said canister (28) which include a calibrated valve (6), the opening of which that allows the hydrocarbon vapors to move from said tank to said canister is signaled to the computer (11);
   - a computer (11) connected to said detection means (6, 7) to increase a counter value (Counter) when said vapors move from said tank (24) to said canister (28);
   - a valve (30) controlled by the computer (11) to cause a number (nBV) of gas volumes to pass through said canister when the heat engine (9) is started so as to reduce the value of the counter by purging said gasoline vapors in the direction of the engine.

7. Device according to Claim 6, wherein the means for detecting movement of hydrocarbon vapors include a pressure sensor (7) on the downstream side of the valve (6) to signal to the computer (11) a pressure value (Pc) that is representative of the opening of the valve (6) .

8. Device according to either of Claims 6 and 7 wherein the computer (11) includes a memory containing a discharge curve that makes it possible to reduce the counter value by tracking it as a function of a number (nBV) of gas volumes passing through said canister (28) .

**Fig. 1**

**Fig. 2**

**Fig. 3**

**Fig. 4**

**Fig. 5**

**EP 3 092 400 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8443787 B
- US 5962927 A